(19) Europäisches Patentamt / European Patent Office / Office européen des brevets

(11) **EP 3 067 976 B1**

(12) **EUROPEAN PATENT SPECIFICATION**

(45) Date of publication and mention
of the grant of the patent:
**29.11.2017  Bulletin 2017/48**

(21) Application number: **14860696.5**

(22) Date of filing: **29.10.2014**

(51) Int Cl.:
**H01M 8/16** *(2006.01)*     **H01M 8/04082** *(2016.01)*

(86) International application number:
**PCT/JP2014/078697**

(87) International publication number:
**WO 2015/068620 (14.05.2015 Gazette 2015/19)**

(54) **MICROBIAL FUEL CELL**

MIKROBIELLE BRENNSTOFFZELLE

PILE À COMBUSTIBLE MICROBIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.11.2013  JP 2013231980**

(43) Date of publication of application:
**14.09.2016  Bulletin 2016/37**

(73) Proprietor: **Panasonic Corporation
Kadoma-shi, Osaka 571-0051 (JP)**

(72) Inventors:
• **SUZUKI, Yuya**
**Osaka-shi, Osaka 540-6207 (JP)**
• **ISHII, Yoshikazu**
**Kyoto-shi, Kyoto 601-8105 (JP)**
• **MIYAHARA, Morio**
**Tokyo 192-0392 (JP)**

• **WATANABE, Kazuya**
**Tokyo 192-0392 (JP)**

(74) Representative: **Müller-Boré & Partner
Patentanwälte PartG mbB
Friedenheimer Brücke 21
80639 München (DE)**

(56) References cited:
**WO-A1-2013/073284      JP-A- 2012 190 787
US-A1- 2009 017 512      US-A1- 2009 087 690**

• **TAKEFUMI SHIMOYAMA ET AL.: 'Electricity
generation from model organic wastewater in a
cassette-electrode microbial fuel cell' APPL
MICROBIOL BIOTECHNOL vol. 80, 2008, pages
325 - 330, XP055290732**
• **'Bio Denki Kagaku no Jissai -Biosensor Bio
Denchi no Jitsuyo Tenkai-, trade edition' 08 April
2013, pages 308 - 309, XP008183981**

## Description

Technical Field

The present invention relates to a microbial fuel cell that can recover electrical energy from organic matter contained in wastewater, waste, and the like by the action of microbes.

Background Art

In recent years, as a method for recovering energy when decomposing organic waste such as wastewater, a microbial fuel cell utilizing the mechanism of a fuel cell has attracted attention. In the microbial fuel cell, electrical energy can be directly recovered by recovering, by the electrode, electrons that microbes release when decomposing organic matter in wastewater and waste.

The cathodes used in the microbial fuel cells as described above include a cathode having a system utilizing dissolved oxygen in a catholyte, and a cathode having a system utilizing oxygen in air. The cathode having a system utilizing oxygen in air is referred to as an air cathode. An advantage of the air cathode is that air should only be flowed through the air cathode, and the aeration of the catholyte is not necessary.

The following Patent Literature 1 discloses one example of a microbial fuel cell using an air cathode. When the microbial fuel cell as described in Patent Literature 1 is used, a liquid comprising microbes capable of growing under anaerobic conditions and organic matter is flowed through the flow path of the gap on the surface of the anode. In addition, air is flowed through the flow path on the surface of the cathode to bring the air into contact with the cathode. In the anode, protons ($H^+$) and electrons ($e^-$) are produced from the organic matter by the microbes. The produced protons transfer to the cathode side. When the anode and the cathode are connected to a load circuit by a lead wire to form a closed circuit, a potential difference occurs between the anode and the cathode, and power energy corresponding to the product of the potential difference and the current flowing through the load circuit can be obtained.

Citation List

Patent Literature

Patent Literature 1: WO 2010/044145A1

Summary of Invention

Technical Problem

In a conventional microbial fuel cell using an air cathode, an internal space in which air is present is provided on the surface of a liquid comprising organic matter. In this case, oxygen dissolves in the liquid comprising organic matter through the surface.

In the above microbial fuel cell, electrical energy is generated by the decomposition of the organic matter in the liquid by anaerobic, electricity-producing bacteria multiplying in the anode. When oxygen dissolves in the liquid from the liquid surface, aerobic bacteria multiply, and the aerobic bacteria decompose the organic matter in the liquid. Therefore, the amount of the organic matter that should be originally decomposed by the anaerobic bacteria decreases. As a result of this, a problem is that the amount of electrical energy recovered in the microbial fuel cell decreases.

As a method for solving such a problem, Patent Literature 1 proposes a method of introducing an inert gas into an internal space on a liquid surface to replace air in the internal space by the inert gas. When the inert gas is introduced into the internal space on the liquid surface, the amount of oxygen in contact with the liquid surface decreases, and as a result, the amount of oxygen dissolving in the liquid through the surface can be decreased.

However, problems with the inert gas are that handling and storage are difficult, and the price is high. Therefore, if the inert gas is used, problems with the microbial fuel cell are again that handling and storage are more difficult, and the price of the microbial fuel cell is higher.

It is an object of the present invention to provide a microbial fuel cell that can inhibit oxygen from dissolving in a liquid through the surface to increase electrical energy recovery efficiency.

Solution to Problem

According to a broad aspect of the present invention, a microbial fuel cell is provided which comprises a liquid comprising organic matter; an anode placed in the liquid comprising the organic matter; an air cathode having an air intake portion for taking air into the air cathode; and an oxygen-blocking portion for blocking oxygen from dissolving in the liquid comprising the organic matter through the surface of the liquid comprising the organic matter.

In a particular aspect of the microbial fuel cell according to the present invention, the oxygen-blocking portion is in contact with the surface of the liquid comprising the organic matter.

In a particular aspect of the microbial fuel cell according to the present invention, the oxygen-blocking portion floats on the surface of the liquid comprising the organic matter.

In a particular aspect of the microbial fuel cell according to the present invention, the oxygen-blocking portion is in contact with the air cathode.

In a particular aspect of the microbial fuel cell according to the present invention, the oxygen-blocking portion is coupled to the air cathode.

In a particular aspect of the microbial fuel cell according to the present invention, the oxygen-blocking portion is coupled to the air cathode and the anode.

Advantageous Effect of Invention

The microbial fuel cell according to the present invention comprises a liquid comprising organic matter; an anode placed in the above liquid comprising the organic matter; an air cathode having an air intake portion for taking air into the air cathode; and an oxygen-blocking portion for blocking oxygen from dissolving in the above liquid comprising the organic matter through the surface of the above liquid comprising the organic matter and therefore can increase electrical energy recovery efficiency.

Brief Description of Drawings

[Figure 1] Figure 1 is a cross-sectional view schematically showing a microbial fuel cell according to the first embodiment of the present invention.
[Figure 2] Figure 2 is a cross-sectional view schematically showing a microbial fuel cell according to the second embodiment of the present invention.
[Figure 3] Figures 3(a) and 3(b) are cross-sectional views schematically showing a microbial fuel cell obtained in Example 1.
[Figure 4] Figures 4(a) and 4(b) are cross-sectional views schematically showing a microbial fuel cell obtained in Comparative Example 1.

Description of Embodiments

The present invention will be clarified below by describing specific embodiments of the present invention with reference to the drawings.

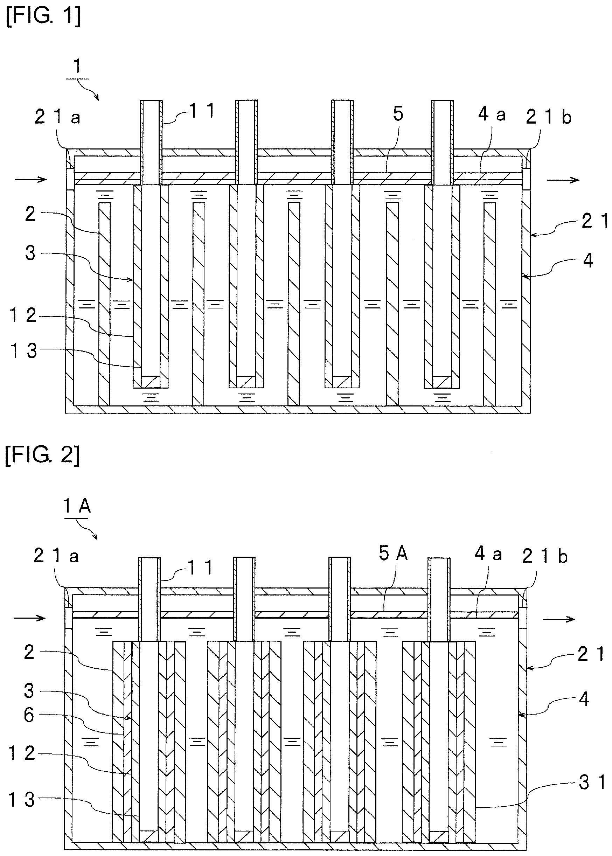

Figure 1 is a cross-sectional view schematically showing a microbial fuel cell according to the first embodiment of the present invention. Figure 1 is a front cross-sectional view, and the up-and-down direction in Figure 1 is the vertical direction.
A microbial fuel cell 1 shown in Figure 1 comprises anodes 2, air cathodes 3, a liquid 4 comprising organic matter, an oxygen-blocking portion 5, and a lead wire. The lead wire is placed at a position not shown. The liquid 4 comprising the organic matter is placed in a container 21.
The anode 2 is placed in the liquid 4 comprising the organic matter, positioned below the liquid surface 4a of the liquid 4 comprising the organic matter, and immersed in the liquid 4 comprising the organic matter. The entire anode 2 is preferably placed in the liquid 4 comprising the organic matter.
In the microbial fuel cell 1, the plurality of anodes 2 and the plurality of air cathodes 3 are alternately placed side by side at intervals. The liquid 4 comprising the organic matter flows through the gaps between the anodes 2 and the air cathodes 3.
The air cathode 3 has an air intake portion 11 for taking air into the air cathode 3. The air intake portion 11 is, for example, a frame-like member having a flow path through which air flows. The air cathode 3 has two cathodes 12 placed opposed to each other, and an air chamber 13 placed between the two cathodes 12. Therefore, the cathodes 12 are in contact with the air chamber 13. The air chamber 13 is an air layer. The air cathode 3 has a frame member at the lower end of the air chamber 13, and the outflow of air from the air chamber 13 is prevented by the frame member. In the air cathode 3, air can be taken into the air chamber 13 from the air intake portion 11. One end of the air intake portion 11 is connected to the air chamber 13. The other end of the air intake portion 11 leads to the outside of the container 21 above the liquid surface 4a. From the outside of the container 21, air can pass through the air intake portion 11 and be taken into the air chamber 13. An air-permeable member may be placed in the above air chamber.
The container 21 has an inflow port 21a for the liquid 4 comprising the organic matter and an outflow port 21b for the liquid 4 comprising the organic matter. In the container 21, the liquid 4 comprising the organic matter flows from the inflow port 21a side to the outflow port 21b side. The container 21 has an internal space (gap) on the liquid surface 4a of the liquid 4 comprising the organic matter in the container 21. A gas is placed in the internal space in the container 21. The gas placed in the internal space in the container 21 is generally air comprising oxygen.
The oxygen-blocking portion 5 blocks oxygen from dissolving in the liquid 4 comprising the organic matter from the liquid surface 4a of the liquid 4 comprising the organic matter. The oxygen-blocking portion 5 blocks oxygen in air placed in the internal space in the container 21 from dissolving in the liquid 4 comprising the organic matter.
The oxygen-blocking portion 5 is positioned above the anodes 2 and positioned above the cathodes 12 and the air chambers 13. In the microbial fuel cell 1, the oxygen-blocking portion 5 is in contact with the liquid surface 4a of the liquid 4 comprising the organic matter and floats on the liquid surface 4a. The oxygen-blocking portion 5 has floating properties for the liquid 4 comprising the organic matter. The lower surface side of the oxygen-blocking portion 5 is immersed in the liquid 4 comprising the organic matter and positioned below the liquid surface 4a. The upper surface side of the oxygen-blocking portion 5 is not immersed in the liquid 4 comprising the organic matter and is positioned above the liquid surface 4a. By using the oxygen-blocking portion 5 having floating properties, when the amount of the liquid 4 comprising the organic matter changes, and the position of the liquid surface 4a fluctuates, the position of the oxygen-blocking portion 5 can fluctuate following the fluctuation of the position of the liquid surface 4a. As a result, even if the position of the liquid surface 4a fluctuates, the dissolution of oxygen in the liquid 4 comprising the organic matter can be inhibited by the oxygen-blocking portion 5 as a result of the liquid surface 4a being covered with the oxygen-blocking portion 5. Even if the above internal space is present on the liquid surface 4a of the liquid 4 comprising the organic matter in the container 21, the dissolution of oxygen present in the above internal space in the liquid 4 comprising the organic matter is inhibited by the oxygen-blocking portion 5. It is preferred that the position of the above oxygen-blocking portion can fluctuate following the fluctuation of the position of the liquid surface 4a.

The oxygen-blocking portion 5 has openings. The air intake portions 11 are inserted into the openings. In order to even more reliably prevent the dissolution of oxygen in the liquid 4 comprising the organic matter, in the microbial fuel cell 1, the oxygen-blocking portion 5 is in contact with the entire liquid surface 4a. As a result, the liquid surface 4a is not in contact with air. In this manner, the above oxygen-blocking portion is preferably in contact with the entire liquid surface 4a. However, the above oxygen-blocking portion need not be in contact with the entire liquid surface 4a. As the contact area of the above oxygen-blocking portion with respect to the total surface area of the liquid surface 4a increases, the dissolution of oxygen in the liquid 4 comprising the organic matter is even more inhibited. The contact area of the above oxygen-blocking portion in 100% of the total surface area of the liquid surface 4a is preferably 50% or more, more preferably 80% or more, even more preferably 90% or more, further preferably 95% or more, even further preferably 98% or more, particularly preferably 99% or more, and most preferably 99.5% or more.

In addition, in the microbial fuel cell 1, the oxygen-blocking portion 5 is in contact with the air cathodes 3, coupled to the air cathodes 3, and integrally constructed with the air cathodes 3. Specifically, the oxygen-blocking portion 5 is in contact with and coupled to the upper surfaces of the cathodes 12 and the air chambers 13 and in contact with and coupled to the outer peripheral surfaces of the air intake portions 11. Since the above oxygen-blocking portion is coupled to the air cathodes 3 and integrally constructed with the air cathodes 3, the attachment (placement) and detachment (removal) of the above oxygen-blocking portion are even easier.

The above oxygen-blocking portion may be in contact with the above anodes, may be coupled to the above anodes, and may be integrally constructed with the above anodes. The above oxygen-blocking portion may be in contact with both the above air cathodes and the above anodes, may be coupled to both the above air cathodes and the above anodes, and may be integrally constructed with both the above air cathodes and the above anodes. In this case, the attachment (placement) and detachment (removal) of the above oxygen-blocking portion are even easier. When the above oxygen-blocking portion is coupled to both the above air cathodes and the above anodes, the above oxygen-blocking portion may be coupled to the above anodes via the above air cathodes.

The above lead wire connects the anodes 2 and the cathodes 12 at positions not shown. The above lead wire is connected to an external circuit not shown. When the anodes 2 and the cathodes 12 are connected to a load circuit via the above lead wire, a potential difference occurs between the anodes 2 and the cathodes 12. Electrical energy flowing through the load circuit through the above lead wire can be recovered.

In the microbial fuel cell 1, since the oxygen-blocking portion 5 integrated with the air cathodes 3 floats on the liquid surface 4a, the contact between the liquid 4 comprising the organic matter and air is effectively blocked, and oxygen in the air can be inhibited from dissolving in the liquid 4 comprising the organic matter. In this embodiment, even if the gas in the internal space in the container 21 is not replaced by an inert gas, the dissolution of oxygen in the liquid 4 comprising the organic matter can be inhibited. In order to even more decrease the amount of oxygen in the internal space in the container 21, an inert gas may be introduced into the internal space in the container 21.

The oxygen-blocking portion 5 is preferably a member having low oxygen permeability, particularly preferably an oxygen-impermeable member. The oxygen-blocking portion 5 need not necessarily have completely oxygen-impermeable properties. As the oxygen permeability of the oxygen-blocking portion 5 decreases, the dissolution of oxygen in the liquid 4 comprising the organic matter can be effectively inhibited.

The oxygen-blocking portion 5 is, for example, an oxygen-blocking member. The oxygen-blocking portion 5 is preferably a sheet. The sheet includes a film. The oxygen-blocking portion 5 may be a liquid material that does not dissolve oxygen, or may be an oxygen-impermeable liquid material. The oxygen-blocking portion 5 may be a foam. The oxygen-blocking portion 5 may be a laminate of a foam and an oxygen-impermeable sheet. The material of the oxygen-blocking portion 5 is not particularly limited as long as it has oxygen-blocking properties. Examples of the material of the oxygen-blocking portion 5 include polyolefin resins and foamed polystyrene. Examples of the above polyolefin resins include polyethylene and polypropylene. The specific gravity of the oxygen-blocking portion 5 is preferably 1 or less, more preferably less than 1.

Figure 2 is a cross-sectional view schematically showing a microbial fuel cell according to the second embodiment of the present invention. Figure 2 is a front cross-sectional view, and the up-and-down direction in Figure 2 is the vertical direction.

A microbial fuel cell 1A shown in Figure 2 comprises anodes 2, air cathodes 3, a liquid 4 comprising organic matter, an oxygen-blocking portion 5A, a lead wire, and spacers 6. The lead wire is placed at a position not shown. The liquid 4 comprising the organic matter is placed in a container 21.

The microbial fuel cell 1 shown in Figure 1 and the microbial fuel cell 1A shown in Figure 2 are different in the oxygen-blocking portion 5 and the oxygen-blocking portion 5A, in whether the spacers 6 are used or not, and in the lamination construction of the anodes 2 and the air cathodes 3, and the others are similarly constructed. In the description of the microbial fuel cell 1A, parts in which the same members as the microbial fuel cell 1 are used are denoted by the same numerals, and their description is omitted.

The oxygen-blocking portion 5A blocks oxygen from dissolving in the liquid 4 comprising the organic matter from the liquid surface 4a of the liquid 4 comprising the organic matter. The oxygen-blocking portion 5A is positioned above the anodes 2 and positioned above cathodes 12 and air chambers 13. The oxygen-blocking portion 5A has openings. Air intake portions 11 are inserted into the openings. The oxygen-blocking portion 5A is in contact with the air intake portions 11. The oxygen-blocking portion 5A is movable in the up-and-down direction and movable in the direction of connecting one ends and the other ends of the air intake portions 11. In the microbial fuel cell 1A, the lower surface of the oxygen-blocking portion 5A is in contact with the liquid surface 4a of the liquid 4 comprising the organic matter. The oxygen-blocking portion 5A is not coupled to the air cathodes 3 and is not integrated with the air cathodes 3.

The spacer 6 is placed between the anode 2 and the air cathode 3. The spacer 6 effectively prevents the anode 2 and the cathode 12 from coming into direct contact with each other. The above spacer may be an ion-permeable membrane.

In the microbial fuel cell 1A, a first anode 2, a first spacer 6, the air cathode 3, a second spacer 6, and a second anode 2 are layered in this order, and an electrode assembly 31 is constructed. In the electrode assembly 31, specifically, the first anode 2, the first spacer 6, a first cathode 12, the air chamber 13, a second cathode 12, the second spacer 6, and the second anode 2 are layered in this order. In the microbial fuel cell 1A, a plurality of the electrode assemblies 31 are placed side by side at intervals. The liquid 4 comprising the organic matter flows through the gaps between the plurality of anodes 2.

In the microbial fuel cell 1A, since the oxygen-blocking portion 5A is in contact with the liquid surface 4a, the contact between the liquid 4 comprising the organic matter and air is blocked, and oxygen in the air can be inhibited from dissolving in the liquid 4 comprising the organic matter.

The present invention will be described in more detail below by giving Examples. The present invention is not limited only to the following Examples.

(Example 1)

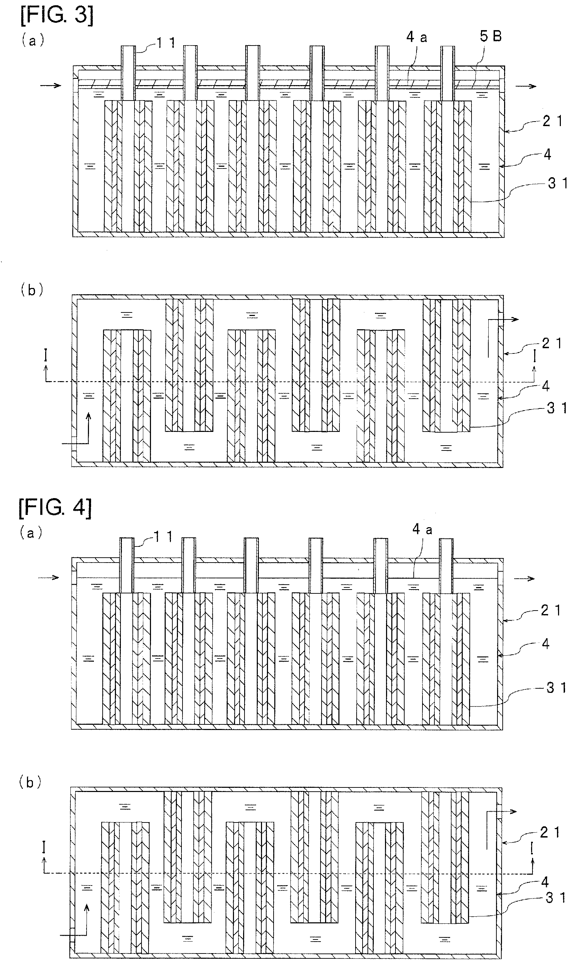

In Example 1, a microbial fuel cell shown in Figures 3(a) and 3(b) was fabricated. The up-and-down direction in Figure 3(a) is the vertical direction. Figure 3(a) is a front cross-sectional view, and Figure 3(b) is a plan cross-sectional view. Figure 3(a) is a cross-sectional view taken along line I-I in Figure 3(b). In Example 1, an oxygen-blocking portion 5B constructed similarly to the oxygen-blocking portion 5 shown in Figure 1 was used. In addition, in Example 1, the electrode assemblies 31 shown in Figure 2 were used.

As the anode, graphite felt (manufactured by SOHGOH-C Co., Ltd.) was used. The size of the anode is 85 mm long by 90 mm wide by 5 mm thick. As the air cathode, an air cathode obtained by sintering a polytetrafluoroethylene layer on carbon paper (carbon paper "TGP-H-120" manufactured by Toray Industries Inc.) was used. An air intake portion 11 was provided in the air cathode using a frame-like member in order to take air into the air cathode. As the catalyst for the cathode, a platinum catalyst ("TEC10E70TPM" manufactured by TANAKA KIKINZOKU KOGYO K.K.) was used, and as the binder for the catalyst, a Nafion solution ("Nafion perfluorinated resin solution" manufactured by Sigma-Aldrich Japan K.K.) was used. The platinum was applied to the cathode so that the amount of the platinum supported was 4 mg/cm$^2$. A spacer having a thickness of 3 mm was mounted between the above anode and cathode in order to prevent direct conduction between the anode and the cathode.

Six of the electrode assemblies 31 of the above anodes, the above spacers, and the above air cathodes were mounted in a container 21 as shown in Figures 3(a) and 3(b). The volume in the container 21 after the electrode assemblies 31 were mounted was 1 L.

As the oxygen-blocking portion, an oxygen-blocking portion obtained by applying an epoxy resin ("Loctite, E-20HP" manufactured by Henkel) to the surface of an extrusion-foamed polystyrene plate ("STYROFOAM" manufactured by Dow Kakoh K.K., thickness 10 mm) was used.

The above oxygen-blocking portion as a lid for a liquid surface 4a was mounted in the container 21 so as to be in contact with the liquid surface 4a of a liquid 4 comprising organic matter and so as to float on the liquid surface 4a of the liquid 4 comprising the organic matter. The above oxygen-blocking portion was not fixed to any of the inner wall surface of the container 21, the anodes, and the air cathodes. The above oxygen-blocking portion is in a state of floating on the liquid 4 comprising the organic matter, and the height position can fluctuate following the fluctuation of the liquid surface 4a of the liquid 4 comprising the organic matter. In this manner, the microbial fuel cell was obtained.

(Comparative Example 1)

In Comparative Example 1, a microbial fuel cell shown in Figures 4(a) and 4(b) was fabricated. The up-and-down direction in Figure 4(a) is the vertical direction.

Figure 4(a) is a front cross-sectional view, and Figure 4(b) is a plan cross-sectional view. Figure 4(a) is a cross-sectional view taken along line I-I in Figure 4(b). In Comparative Example 1, the electrode assemblies 31 shown in Figure 2 were used.

In Comparative Example 1, an oxygen-blocking portion was not used. In other words, in Comparative Example 1, the microbial fuel cell was obtained as in Example 1 except that air was brought into contact with the entire liquid surface 4a without using an oxygen-blocking portion.

(Evaluation)

The output was evaluated using each of the obtained microbial fuel cells. While artificial wastewater comprising an organic matter such as starch was continuously flowed into the above microbial fuel cell at a predetermined COD load (0.2 kg/m$^3$/day), the above microbial fuel cell was continuously operated over 40 days. The above microbial fuel cell was connected to a load circuit, and the potential difference between both ends of the load (resistance value 40$\Omega$) at this time was measured. The output was obtained by formula (1).

$$P = V^2/R \quad (1)$$

(P: output, V: the potential difference between both ends of the load circuit, R: the resistance value of the load circuit)

Soil microbes as anaerobic microbes for power generation were inoculated into the above artificial wastewater.

The output in each of Example 1 and Comparative Example 1 was obtained from the average value for 10 days after the output became stable. As a result, the outputs were the following values.

Results of outputs:

Example 1: 2.2 mW
Comparative Example 1: 0.8 mW

Reference Signs List

1, 1A       a microbial fuel cell
2       an anode
3       an air cathode
4       a liquid comprising organic matter
4a       a liquid surface
5, 5A, 5B       an oxygen-blocking portion
6       a spacer

11       an air intake portion
12       a cathode
13       an air chamber
21       a container
21a       an inflow port
21b       an outflow port
31       an electrode assembly

## Claims

1. A microbial fuel cell comprising:

   a liquid comprising organic matter;
   an anode placed in the liquid comprising the organic matter;
   an air cathode having an air intake portion for taking air into the air cathode; and
   an oxygen-blocking portion for blocking oxygen from dissolving in the liquid comprising the organic matter through the surface of the liquid comprising the organic matter, the oxygen-blocking portion having floating properties for the liquid comprising the organic matter.

2. The microbial fuel cell according to claim 1, wherein the oxygen-blocking portion is in contact with the surface of the liquid comprising the organic matter.

3. The microbial fuel cell according to claim 1 or 2, wherein the oxygen-blocking portion floats on the surface of the liquid comprising the organic matter.

4. The microbial fuel cell according to any one of claims 1 to 3, wherein the oxygen-blocking portion is in contact with the air cathode.

5. The microbial fuel cell according to any one of claims 1 to 4, wherein the oxygen-blocking portion is coupled to the air cathode.

6. The microbial fuel cell according to any one of claims 1 to 5, wherein the oxygen-blocking portion is coupled to the air cathode and the anode.

## Patentansprüche

1. Mikrobielle Brennstoffzelle, umfassend:

   eine Flüssigkeit, die organische Materie bzw. Substanz umfasst;
   eine Anode, die in der organische Materie umfassenden Flüssigkeit platziert ist;
   eine Luftkathode mit einem Lufteinlassabschnitt zum Einlassen von Luft in die Luftkathode; und
   einen Sauerstoff blockierenden Abschnitt zum Blockieren von Sauerstoff hinsichtlich eines Auflösens in der organische Materie umfassenden Flüssigkeit durch die Fläche bzw. Oberfläche der organische Materie umfassenden Flüssigkeit, wobei der Sauerstoff blockierende Abschnitt Schwebeeigenschaften für die organische Materie umfassenden Flüssigkeit aufweist.

2. Mikrobielle Brennstoffzelle nach Anspruch 1, wobei der Sauerstoff blockierende Abschnitt mit der Oberfläche der organische Materie umfassenden Flüssigkeit in Kontakt ist.

3. Mikrobielle Brennstoffzelle nach Anspruch 1 oder 2, wobei der Sauerstoff blockierende Abschnitt auf der Oberfläche der organische Materie umfassenden Flüssigkeit schwebt.

4. Mikrobielle Brennstoffzelle nach einem der Ansprüche 1 bis 3, wobei der Sauerstoff blockierende Abschnitt mit der Luftkathode in Kontakt ist.

5. Mikrobielle Brennstoffzelle nach einem der Ansprüche 1 bis 4, wobei der Sauerstoff blockierende Abschnitt mit der Luftkathode gekoppelt ist.

6. Mikrobielle Brennstoffzelle nach einem der Ansprüche 1 bis 5, wobei der Sauerstoff blockierende Abschnitt mit der Luftkathode und der Anode gekoppelt ist.

**Revendications**

1. Pile à combustible microbienne comprenant :

   un liquide comprenant de la matière organique ;
   une anode placée dans le liquide comprenant la matière organique ;
   une cathode à air ayant une portion d'admission d'air pour amener de l'air dans la cathode à air ; et
   une portion de blocage d'oxygène pour bloquer la dissolution d'oxygène dans le liquide comprenant la matière organique à travers la surface du liquide comprenant la matière organique, la portion de blocage d'oxygène ayant des propriétés de flottement pour le liquide comprenant la matière organique.

2. Pile à combustible microbienne selon la revendication 1, dans laquelle la portion de blocage d'oxygène est en contact avec la surface du liquide comprenant la matière organique.

3. Pile à combustible microbienne selon la revendication 1 ou 2, dans laquelle la portion de blocage d'oxygène flotte à la surface du liquide comprenant la matière organique.

4. Pile à combustible microbienne selon l'une quelconque des revendications 1 à 3, dans laquelle la portion de blocage d'oxygène est en contact avec la cathode à air.

5. Pile à combustible microbienne selon l'une quelconque des revendications 1 à 4, dans laquelle la portion de blocage d'oxygène est couplée à la cathode à air.

6. Pile à combustible microbienne selon l'une quelconque des revendications 1 à 5, dans laquelle la portion de blocage d'oxygène est couplée à la cathode à air et l'anode.

[FIG. 1]

[FIG. 2]

[FIG. 3]

(a)

(b)

[FIG. 4]

(a)

(b)

**EP 3 067 976 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010044145 A1